# EUROPEAN PATENT APPLICATION

(11) **EP 2 528 054 A2**
(43) Date of publication of application: **28.11.2012**
(21) Application number: 12169251.1
(22) Date of filing: 24.05.2012
(51) Int. Cl.: G10H 1/00, G06F 17/30

(54) **Management of a sound material to be stored into a database**

(30) Priority: 26.05.2011 JP 2011118517
(71) Applicant: YAMAHA CORPORATION, Hamamatsu-shi Shizuoka-ken 430-8650 (JP)
(72) Inventor: Usui, Jun, Shizuoka-ken, 430-8650 (JP); Kamiya, Taishi, Shizuoka-ken, 430-8650 (JP)
(74) Representative: HOFFMANN EITLE

(57) **Abstract**

A data processing apparatus acquires a waveform data set from a waveform DB where waveform data sets are stored in association with tag data for classifying the waveform data sets, analyzes a sound waveform signal indicated by the acquired waveform data set to thereby identify a period of the sound waveform signal, having a predetermined feature, as a waveform signal of a sound material, and calculates a feature amount by analyzing the sound waveform signal of a sound material. Then, the data processing apparatus registers, into a sound material DB, identification data indicative of the sound waveform signal of the sound material, feature amount data indicative of the calculated feature amount and the tag data corresponding to the acquired waveform data set in association with one another. In this way, a user can select, from the sound material database, a desired sound material by use of information related to the sound waveform signal from which the sound material was extracted.

## Description

The present invention relates generally to a technique for registering, into a database, a sound material extracted from a sound waveform signal, and more particularly to appropriate management of information related to a sound material to be stored into a database. It should be noted that the term "sound" is used herein to refer to any of all types of sounds, such as a voice, scratch sound, noise, effect sound and environmental sound, not to mention a tone and musical sound.

Heretofore, there have been known techniques for prestoring a multiplicity of fragmentary sound materials in a database and then generating a sound (i.e., sound waveform) by selectively combining some of the prestored sound materials. Namely, individual sound materials to be used for generating a sound are selected as appropriate from among the multiplicity of fragmentary sound materials stored or registered in the database. Japanese Patent Application Laid-open Publication No. 2010-191337 (hereinafter referred to also as "the relevant patent literature") discloses that a plurality of sound materials to be registered into a database are extracted, in accordance with a predetermined algorithm, from respective continuous sound waveform signals of a multiplicity of music pieces. With the technique disclosed in the relevant patent literature, the extracted sound materials are registered into the database after being classified according to their characters or features, and thus, a user can select a desired sound material from the database with reference to the classifications.

The sound materials are classified according to their characteristics or features as noted above. But, when sound materials are extracted from sound waveform signals of music pieces having similar attributes, such as music pieces of a same musical genre, it is preferable that these sound materials be handled as having similar features. However, with the technique disclosed in the relevant patent literature, where the sound materials are classified according to their characters or features, information as to what kinds of attributes extracted-from (or extraction-source) sound waveform signals had was not associated with the sound materials. Therefore, when selecting any desired sound material from the database, the user could not use information related to the extraction-source sound waveform signal from which the sound material was extracted.

In view of the foregoing prior art problems, it is an object of the present invention to appropriately manage information related to a sound material to be stored into a database, and more particularly to allow a user to readily select any desired sound material from the database by use of information related to an extraction-source sound waveform signal from which the sound material was extracted.

In order to accomplish the above-mentioned object, the present invention provides an improved data processing apparatus comprising: an acquisition section which acquires a sound data set from a waveform database where the sound data set and meta data for classifying the sound data set are stored in association with each other; a sound material identification section which analyzes a sound waveform signal indicated by the sound data set acquired by the acquisition section and thereby identifies a partial time period of the sound waveform signal as a sound waveform signal of a sound material; a feature amount generation section which analyzes the sound waveform signal of the sound material identified by the sound material identification section and thereby generates feature amounts quantitatively indicating features of the sound waveform signal of the sound material; and a registration section which registers identification data indicative of the sound waveform signal of the sound material, feature amount data indicative of the feature amounts generated by the feature amount generation section and the meta data corresponding to the acquired sound data set into a sound material database in association with one another.

The present invention constructed in the aforementioned manner permits appropriate management of information related to a sound material to be stored into the sound material database, by use of information related to the sound waveform signal from which the sound material was extracted (i.e., by use of information related to an extraction-source sound waveform signal). More specifically, a user can select a desired sound material from the sound material database by use of the information related to the extraction-source sound waveform signal, and thus, the present invention facilitates sound material selection taking into account characters or features of the extraction-source sound waveform signal.

In a preferred embodiment, the data processing apparatus of the present invention further comprises: a condition determination section which determines, as search conditions, the meta data designated by a user and the feature amounts; a feature identification section which searches for and identifies, from the sound material database, feature amount data with which is associated the meta data indicated by the search conditions and which is similar to the feature amounts indicated by the search conditions; and a display control section which causes a display section to display, as a search result, information indicative of identification data corresponding to the feature amount data identified by the feature identification section.

In another preferred embodiment, the sound material identification section analyzes a sound waveform signal in a user-designated partial range of the sound waveform signal indicated by the acquired sound data set and thereby identifies, as a sound waveform signal of a sound material, a partial time period of the analyzed sound waveform signal.

In still another preferred embodiment, the identification data indicates a sound waveform signal of the period, identified by the sound material identification section, by a combination of the sound waveform signal indicated by the acquired sound data set and time information indicative of the identified partial time period of the sound waveform signal indicated by the acquired sound data set.

In still another preferred embodiment, the identification data indicates a sound waveform signal of the partial time period, identified by the sound material identification section, extracted from the sound waveform signal indicated by the sound data set.

The present invention may be constructed and implemented not only as the apparatus invention discussed above but also as a method invention. Also, the present invention may be arranged and implemented as a software program for execution by a processor, such as a computer or DSP, as well as a non-transitory storage medium storing such a software program. In this case, the program may be provided to a user in the storage medium and then installed into a computer of the user, or delivered from a server apparatus to a computer of a client via a communication network and then installed into the client's computer. Further, the processor used in the present invention may comprise a dedicated processor with dedicated logic built in hardware, not to mention a computer or other general-purpose processor capable of running a desired software program.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will hereinafter be described in detail, by way of example only, with reference to the accompanying drawings, in which:
Fig. 1 is a block diagram showing an example overall hardware setup of a data processing apparatus according to a preferred embodiment of the present invention;
Fig. 2 is a diagram explanatory of an example of a waveform database (DB) employed in the embodiment of the present invention;
Fig. 3 is a diagram explanatory of an example of a sound material database (DB) employed in the embodiment of the present invention;
Figs. 4A and 4B are explanatory of content of sound materials indicated by identification data in the embodiment of the present invention;
Fig. 5 is a diagram explanatory of an example of a classification template employed in the embodiment of the present invention;
Fig. 6 is a block diagram explanatory of a sound material extraction function and a correction function in the embodiment of the present invention;
Fig. 7 is a diagram showing an example of an analysis period designation display presented on a display screen in the embodiment of the present invention;
Fig. 8 is a diagram showing an example of an extraction completion display presented on the display screen in the embodiment of the present invention;
Fig. 9 is a diagram showing an example of a period correction display presented on the display screen presented on the display screen in the embodiment of the present invention;

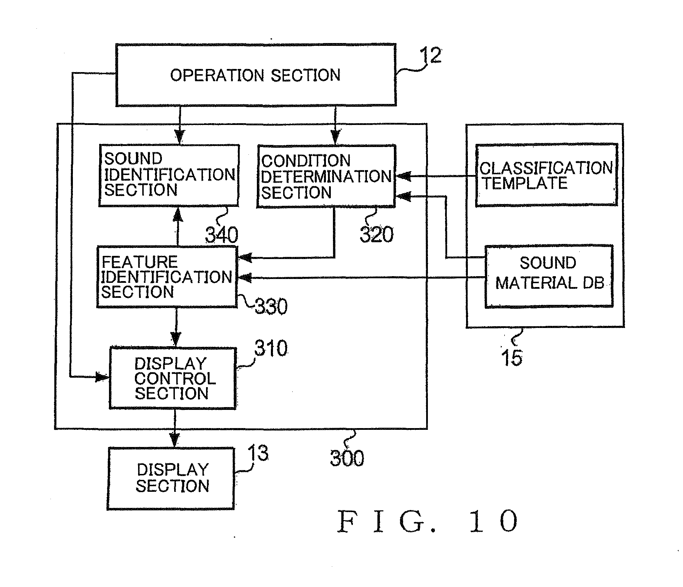

Fig. 10 is a block diagram explanatory of a construction of a data search function in the embodiment of the present invention;
Fig. 11 is a diagram explanatory of an example of a search condition setting display presented on the display screen in the embodiment of the present invention;
Fig. 12 is a diagram explanatory of an example of a searched-out result display presented on the display screen in the embodiment of the present invention;
Fig. 13 is a diagram explanatory of another example of the searched-out result display presented on the display screen when selected tag data has been switched to other tag data in the display of Fig. 12;
Fig. 14 is a diagram explanatory of another example of the sound material determination display presented on the display screen in the embodiment of the present invention; and
Fig. 15 is a diagram showing an example display presented on the display screen in response to manual sound material extraction operation in the embodiment of the present invention.

### <Preferred Embodiment>

### <Outline of the Embodiment>

The data processing apparatus according to a preferred embodiment of the present invention is an information processing apparatus, such as a personal computer, portable telephone, PDA (Personal Digital Assistant) or tablet terminal, which implements a function called "DAW (Digital Audio Workstation)" by executing a particular application program on an OS (Operating System). In the DAW implemented by the embodiment of the data processing apparatus, a function is also implemented for performing control to generate a sound using sound materials extracted as parts of sound waveform signals, as well as functions to be described below, such as a function for extracting sound materials from sound waveform signals, a function for searching through a database for sound materials, etc. These functions are implemented by subroutine programs being executed during execution of the application program implementing the DAW.

### <Hardware Construction of the Data Processing Apparatus >

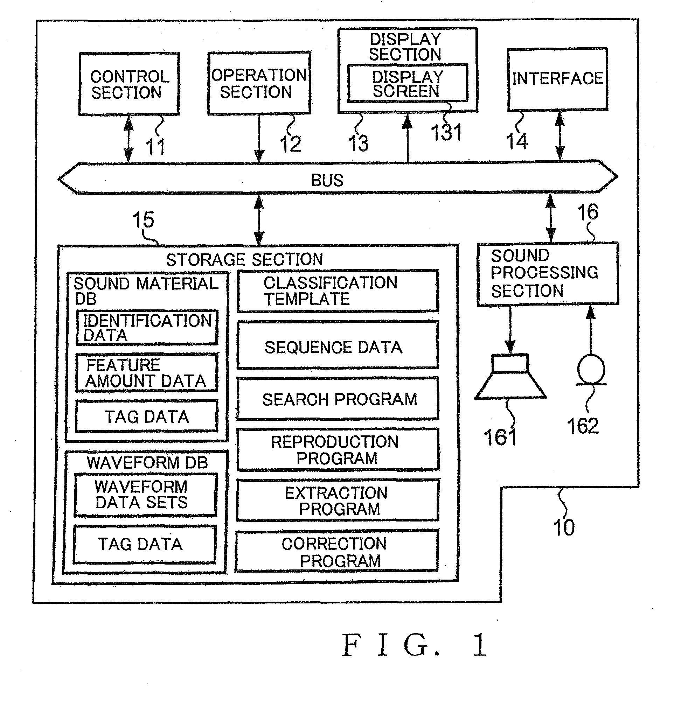

Fig. 1 is a block diagram showing an example overall hardware setup of the data processing apparatus 10. The data processing apparatus 10 includes a control section 11, an operation section 12, a display section 13, an interface 14, a storage section 15 and a sound processing section 16, which are interconnected via a bus. The data processing apparatus 10 also includes a speaker 161 and a microphone 162 connected to the sound processing section 16.

The control section 11 includes a CPU (Central Processing Unit), a RAM (Random Access Memory), a ROM (Read-Only Memory), etc. The control section 11 implements various functions by executing various functions stored in the storage section 15. In the illustrated example of Fig. 1, the program execution by the control section 11 includes execution of the application program implementing the DAW and execution of the above-mentioned subroutine programs. The subroutine programs include a reproduction program, extraction program, correction program and search program stored in the storage section 15, which are executed in response to user's instructions.

The above-mentioned reproduction program is designed to implement a reproduction function for reproducing sequence data, defining content of audible sound generation in the DAW, to perform processing for generating sounds. More specifically, the reproduction function reproduces data of each of later-described tracks in sequence data to synthesize a sound waveform signal and outputs the sound waveform signal through the speaker 161.

The extraction program is designed to implement a sound material extraction function for extracting sound materials from various sound waveform signals, such as sound waveform signals indicated by waveform data sets registered in a waveform DB (database) stored in the storage section 15 and sound waveform signals synthesized by the reproduction function. The correction program is designated to implement a correction function for correcting data of an extracted sound material. The search program is designed to implement a data search function for searching through a sound material DB (database), stored in the storage section 15, for a sound material on the basis of search conditions. Details of the sound material extraction function, correction function and data search function will be discussed later. The data processing apparatus of the present invention is implemented by some or all of constructions corresponding to the abovementioned functions.

The operation section 12 includes operation means, such as operation buttons operable by a user (i.e., capable of receiving user's operation), a keyboard, a mouse and a touch panel, and outputs, to the control section 11, operation data indicative of content of user's operation received thereby. In this way, user's instructions are input to the data processing apparatus 10.

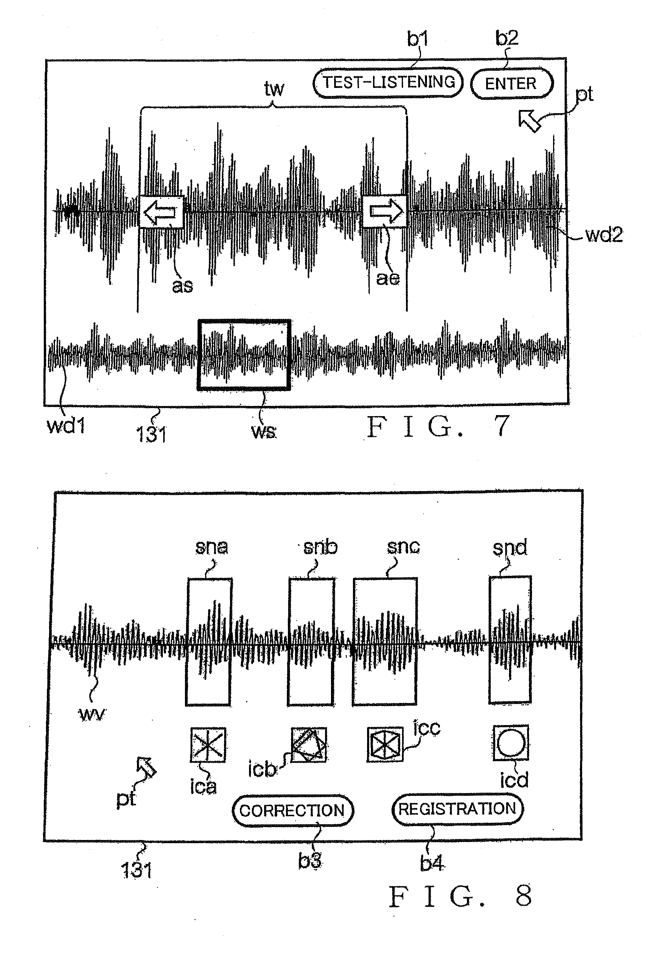

The display section 13 is in the form of a display device, such as a liquid crystal display, which displays on a display screen 131 content corresponding to control performed by the control section 11. The display screen 131 displays any of various content depending on a program executed, such as a menu screen or setting screen (see Figs. 7 to 9 and Figs. 11 to 14).

The interface 14 is connectable with an external device to communicate (transmit and receive) various data with the external device in a wired or wireless fashion. The interface 14 also includes AUX (auxiliary) terminals to which are input audio data from an external device. The interface 14 not only outputs various data, input from an external device, to the control section 11, but also outputs various data to an external device under control of the control section 11. Note that, when an analog signal has been input to any one of the AUX terminals, the input analog signal is subjected to A/D (Analog-to-Digital) conversion. The microphone 162 outputs, to the sound processing section 16, a sound waveform signal indicative of a sound input thereto.

The sound processing section 16 includes, among others, a signal processing circuit, such as a DSP (Digital Signal Processor). In the illustrated example, the sound processing section 16 performs A/D conversion on the sound waveform signal input via the microphone 162 and outputs the A/D-converted signal to the control section 11 as audio data. Further, the sound processing section 16 performs signal processing set by the control section 11, such as sound processing, D/A (Digital-to-Analog) conversion process and amplification process, on the audio data output from the control section 11, and then outputs the thus-processed audio signal to the speaker 161 as a sound waveform signal. The speaker 161 audibly outputs a sound indicated by the sound waveform signal input from the sound processing section 16.

The storage section 15 is in the form of a non-volatile memory, such as a hard disk or flash memory, and has a storage area for storing the above-mentioned various programs. The storage section 15 further has storage areas for storing sequence data, sound material DB, waveform DB and classification templates which are to be used during execution of the various programs.

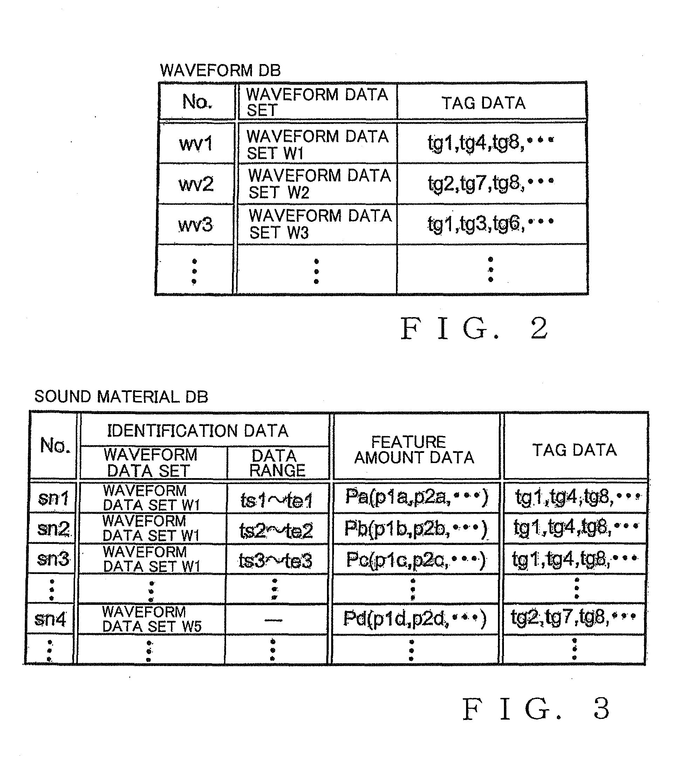

Fig. 2 is a diagram explanatory of an example of the waveform DB employed in the embodiment. In the waveform DB, a plurality of waveform data sets W1, W2, ..., each indicative of a temporally-continuous sound waveform signal, are registered (stored), and one or more tag data are registered (stored) in association with each one of the waveform data sets. More specifically, in the illustrated example of Fig. 2, tag data tg1, tg4, tg8, ... are associated with the waveform data set W 1.

The sound waveform signal indicated by each of the waveform data sets is of any one of various content, such as a continuous music piece sound, phrase sound, particular musical instrument sound, effect sound, noise sound, living environment sound and sound material, and has a time length or duration in a range of below one second to over several minutes. Further, some of the registered waveform data sets may be arranged to be used in a looped fashion. A segment of such a waveform data set arranged to be used in a looped fashion may be used as non-looped waveform data. In the illustrated example, the waveform data sets include data of a plurality of channels (e.g., left (L) and right (R) channels). Although the following description will be given assuming that each of various data sets, such as waveform data sets indicative of sound waveform signals and audio data sets, comprises two channels, i.e. L and R channels, some of the data sets may comprise three more channels or only one (monaural) channel.

The tag data tg1, tg2, ... are meta data for conceptually classifying the waveform data sets in accordance with their characters or features. The tag data tg1, tg2, ... are, for example, meta data for classifying the waveform data sets in accordance with classification attributes conceptually indicative of characters or features of the waveform data sets. For example, such classification attributes conceptually indicative of characters or features of the waveform data sets conceptually describe musical genres, such as "Rock", "Jazz" and "Pop", musical instrument types, such as "Piano", "Guitar", "Bass" and "Drum", etc. These classification attributes are of various types, such as one by a creator of the waveform data sets or the like, one determined as a result of analysis of the waveform data sets based on a predetermined algorithm, one determined in advance when the waveform data sets were registered into the waveform DB, etc. These classification attributes are allocated to individual unique tag data, e.g. "Rock" allocated to the tag data tg1, "Piano" allocated to the tag data tg8, and so on. Further, the tag data may be differentiated among various classification groups, such as musical genres and musical instrument types. Sometimes, a plurality of tag data of a category are associated with a waveform data set; for example, tag data of "Rock" and tag data "Pop" indicative of musical genres may be associated with a waveform data set.

Note that other classification attributes than the aforementioned, such as ones indicative of melodies like "bright", "dark", "quick" and "slow" and ones indicative of data types like "music piece", "musical instrument sound" and "sound material", may be allocated to individual tag data. Further, although meta data are represented in the tag format in the illustrated example, they may be represented in any desired format.

Fig. 3 is a diagram explanatory of an example of the sound material DB employed in the embodiment of the present invention. The sound material DB has registered therein information identifying content of sound materials. As shown in Fig. 3, each of the information identifying substance or content of sound materials includes identification data identifying content of a sound waveform signal of the sound material and feature amount data indicative of features of the sound waveform signal of the sound material. The above-mentioned tag data are also associated with the individual sound materials. The sound materials registered in the sound material DB in association with the tag data are ones extracted by the sound material extraction function.

The identification data comprises a combination of waveform designation information designating any one of the plurality of waveform data sets registered in the waveform DB and time designation information designating by time a particular partial data range in the designated waveform data set. Generally, a sound material comprises waveform data of a range, designated by corresponding time designation information, of one waveform data set registered in the waveform DB. However, there can be another type of sound material that comprises the whole of one waveform data set registered in the waveform DB, as will be described later. In the illustrated example, the time designated by the time designation information is defined as a time from the head or start of the waveform data set. Of various groups of reference characters and numeral representing the time designation information in Fig. 3, each group including "s" indicates a time at a start position while each group including "e" indicates a time at an end position. "ts1 - te1", for example, indicates a partial data range where the time of the start position is "ts1" and the time of the end position is "tel". To the individual sound materials identified by the identification data are assigned respective identifiers (sn1, sn2, ... in the illustrated example). In the following description, a given sound material is indicated like "sound material sn1".

It should be noted that, as a special example, some of the waveform designation information may designate a looped or loop-reproduced waveform (i.e., a waveform to be reproduced repetitively from its start to end). For such a looped waveform, the time of the start position of the data range may be indicated as a time later than the time of the end position of the data range. Namely, from a continuous loop-reproduced waveform, a partial data range including a portion where data reproduction returns from the end to start of the loop can be extracted as a sound material; in this case, the time of the start position designated by the waveform designation information can be set later than the time of the end position. In such a case, the content of the sound material comprises an interconnected combination of a sound waveform signal of a segment from the start position of the partial data range to the end of the waveform data set and a succeeding sound waveform signal of a segment from the start of the waveform data set to the end position of the partial data range.

Note that, in the case of each sound material for which no time designation information is defined in the identification data, the entire waveform data set, designated by the waveform designation information, represents the substance (content) of the sound material. For example, in Fig. 3, no time designation information is defined for the sound material sn4, and thus, the waveform data set identified in association with the sound material sn4 represents the whole of the sound waveform signal of the sound material sn4.

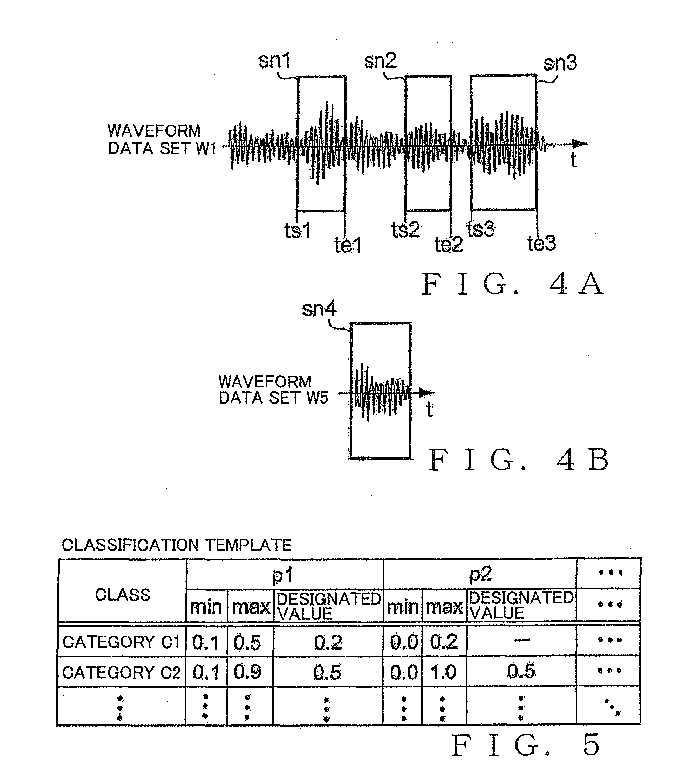

Figs. 4A and 4B are explanatory of content of sound materials indicated by the identification data in the embodiment of the present invention. More particularly, Fig. 4A is a diagram explanatory of sound waveform signals of the sound materials sn1, sn2 and sn3 each comprising a portion or segment of the waveform data set W1, and Fig. 4B is a diagram explanatory of a sound waveform signal of the sound material sn4 comprising the whole of the waveform data set W5. As shown in Fig. 3, the content of the sound material sn1 is identified by the waveform designation information designating "waveform data set W1" and the time designation information designating "ts1 - te1". Thus, the sound waveform signal represented by the sound material sn1 is a sound waveform signal segment in the range of time ts1 - time te1 of the sound waveform signal indicated by the waveform data set W1, as shown in Fig. 4A. Similarly, the sound waveform signals represented by the sound materials sn2 and sn3 are identified as partial ranges of the sound waveform signal indicated by the waveform data set W1. The sound waveform signal of the sound material sn4, on the other hand, is identified as the entire sound waveform signal indicated by the waveform data set W5 because no time designation information is defined for the sound material sn4, as shown in Fig. 4B. Hereinbelow, data representing the sound waveform signals represented by the sound materials sn1, sn2, ... will be referred to as sound material data sets sn1, sn2, ....

Referring back to Fig. 3, the feature amount data indicates a plurality of types of feature amounts p1, p2, ... possessed by the sound waveform signal of the corresponding sound material. Here, the feature amounts are data indicating, in quantitative or numerical value form, individual ones of a plurality of features possessed by one sound or sound material, and they are obtained by analyzing the one sound or sound material. For example, the feature amounts are numerical values obtained by analyzing various characters or features of one sound material, such as different frequencies (in high, medium and low frequency ranges), a time point when an amplitude peak is reached (time point determined on the basis of the start of the sound material data), an intensity of the amplitude peak, degree of harmony, complexity, etc., which are values obtained by analysis of the sound material data. For example, the value of the feature amount p1 indicates an intensity in the high frequency range of the sound material. A set of the feature amount data comprises a combination of respective values of the feature amounts p1, p2, ..., and individual sets of the feature amount data (feature amount data sets) will hereinafter be indicated by Pa, Pb, .... Further, the respective values of the feature amounts p1, p2, ... of the feature amount data set Pa will be indicated by p1a, p2a, ..., the values of the feature amounts p1, p2, ... of the feature amount data set Pb will be indicated by p1b, p2b, ..., and so on. For example, in the case of the sound material sn3, the feature amount data set is indicated by Pc, which comprises a combination of the individual feature amounts is indicated by p1c, pc2, .... In the illustrated example, the value of each of the feature amounts is determined to take a fractional value in a range of "0" to "1".

Fig. 5 is a diagram explanatory of an example of the classification template employed in the embodiment of the present invention. The classification template is designed to provide standard values for classifying a sound material into any one of a plurality of categories in accordance with values of the feature amounts p1, p2, ... of the sound material. For each of the categories, classification standards and a designated value as a representative value of the category are predetermined per type of feature amount, and such values are registered in advance for each of the categories in the classification template.

The categories are concepts for classifying each group of sound materials, similar to each other in auditory character or feature, into a category, such as a category classified as a sound having a clear attack and strong edge feeling (e.g., edge sound), a category classified as a sound heard like noise (e.g., texture sound). The thus-classified categories are indicated in Fig. 5 as category C1, category C2, ....

The classification standards comprise two threshold values, i.e. minimum and maximum values min and max, for each of the types of feature amounts. Thus, each sound material is classified into a category where each of the feature amounts of the sound material satisfies the classification standards. For example, in the case of the sound material classified into category C1, the feature amount p1 satisfies a predetermined value range of "0.1" to "0.5", and the feature amount p2 satisfies a predetermined value range of "0.0" to "0.2".

As noted above, the designated value is a representative value of a feature amount in a category. For example, in the case of category C2, the designated value of the feature amount p1 is "0.5", and the designated value of the feature amount p2 is "0.5". In the case where no designated value is set for a given feature amount like the feature amount p2 of category C1, on the other hand, that feature amount is handled as having no representative value. Such designated values are used for searching for a sound material as will be later described, as well as for classifying a sound material into a category.

For example, as a primary classification stage, a category is provisionally determined per feature amount of one sound material in accordance with the above-mentioned classification standards (minimum value min and maximum value max min and max). At this classification stage, a plurality of categories may sometimes be provisionally determined for the one sound material. Then, as a secondary classification stage, only one category is determined, for example by a majority decision, from among the one or more categories provisionally determined for the sound material. For example, if ten feature amounts of one sound material have been determined as category C1 and two feature amounts of the sound material have been determined as category C2, then the sound material is determined as category C1 by a majority decision. Note that, if one feature amount has been classified into (provisionally determined as) a plurality of categories in accordance with the classification standards (minimum and maximum values min and max), the above-mentioned designated value can be used to narrow the plurality of categories down to one category. For example, if the value of the feature amount p1 is "0.3" in the illustrated example of Fig. 5, the feature amount p1 is first classified into category C1 and category C2 in accordance with the classification standards (minimum and maximum values min and max), but it is then classified into (provisionally determined as) category C1 because the value "0.3" of the feature amount p1 is closer to the designated value "0.2" of category C1 than to the designated value "0.5" of category C2. Note that, if a given feature amount cannot be provisionally determined as only one category, then it may be provisionally determined as a plurality of categories.

Referring back to Fig. 1, the sequence data includes a plurality of tracks time-serially defining content of sound generation. In the illustrated example, each of the tracks in the sequence data is any one of an audio track, MIDI (Musical Instrument Digital Interface) track and sound material track.

The above-mentioned MIDI track is a track defining relationship between various MIDI events, such as note-on, note-off, note number and velocity, and processing timing of these events, such as the numbers of measures, beats and ticks from the head or start of data of the track. In the illustrated example, the MIDI track is defined in the conventionally-known MIDI format, although the MIDI track may be defined in any other suitable format as long as it is a track defining information for controlling, among others, a sound generator that generates sound waveform signals corresponding to the MIDI events.

The audio track is a track defining audio data and reproduction start timing of the audio data. The audio data may be waveform data stored in the waveform DB or data indicative of a sound waveform signal input separately from the waveform data. Similarly to the above-mentioned event processing timing, the reproduction start timing is represented by the numbers of measures, beats and ticks from the start of data of the track. The audio track may also contain other information, such as information indicative of a reproducing sound volume of the audio data.

The sound material track is a track defining sound material data sets and reproduction start timing of the sound material data sets. The sound material data sets are identified in the sound material DB by their respective identifiers. Similarly to the above-mentioned event processing timing, the reproduction start timing is represented by the numbers of measures, beats and ticks from the start of data of the track. Note that the sound material data sets may be identified by the feature amount data of the sound materials rather than the identifiers of the sound materials. In such a case, the reproduction function may be arranged such that feature amount data most similar to the feature amount data defined in the sound material track is identified from the sound material DB and then the sound material data set corresponding to the thus-identified feature amount data is determined as a sound material data set to be reproduced by the reproduction function: The foregoing has been a description about the hardware construction of the data processing apparatus 10.

### <Sound Material Extraction Function and Correction Function>

The following describe the sound material extraction function implemented by the control section 11 of the data processing apparatus 10 executing the extraction program, as well as the correction function implemented by the control section 11 executing the correction program. Note that some or all of the constructions for implementing the sound material extraction function and the correction function to be described below may be implemented by hardware.

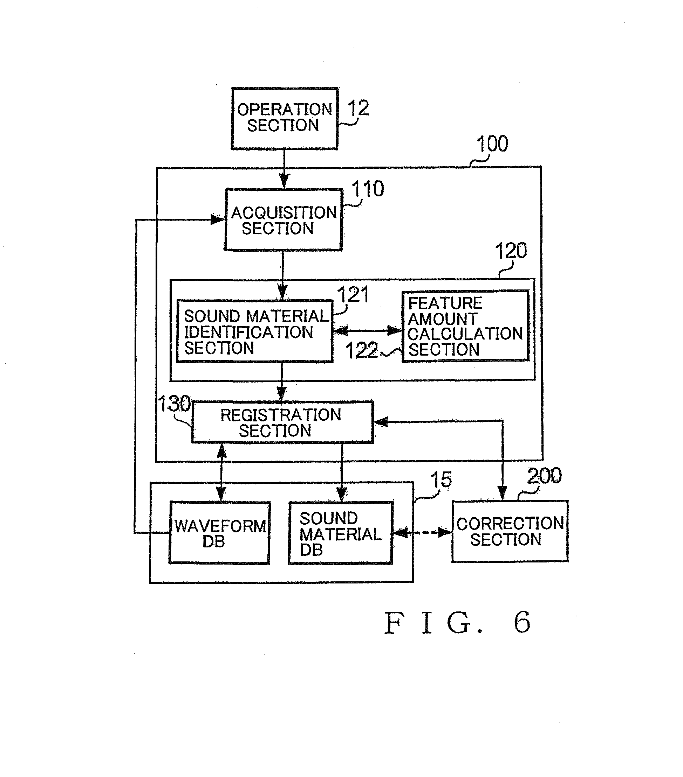

Fig. 6 is a block diagram explanatory of the constructions for implementing the sound material extraction function and the correction function in the embodiment of the present invention. As the control section 11 executes the extraction program, a sound material extraction function section 100, including an acquisition section 110, an extraction section 120 and a registration section 130, is constructed to implement the sound material extraction function is implemented. Further, as the control section 11 executes the correction program, a correction section 200 is constructed to implement the correction function.

In accordance with a user's instruction given from the operation section 12, the acquisition section 110 acquires a waveform set data from among waveform data sets registered in the waveform DB and outputs the acquired waveform data set to the extraction section 120.

The extraction section 120 includes a sound material identification section 121 and a feature amount calculation section (feature amount generation section) 122, and, through processing by the sound material identification section 121 and feature amount calculation section 122, the extraction section 120 extracts a sound material from the input waveform data set and calculates the aforementioned plurality of feature amounts of the extracted sound material. Then, the extraction section 120 outputs, to the registration section 130, information indicative of a segment of the sound waveform signal, indicated by the waveform data set, that corresponds to the extracted sound material and feature amount data indicative of the calculated feature amounts of the extracted sound material. At that time, the extraction section 120 also outputs information identifying the waveform data set from which the sound material has been extracted (i.e., the waveform data set input to the extraction section 120).

The following describe functions of the sound material identification section 121 and feature amount calculation section (feature amount generation section) 122. The sound material identification section 121 identifies partial time periods corresponding to one or more sound materials included in a time-series sound waveform signal indicated by the waveform data set input to the extraction section 120 (such a sound waveform signal will hereinafter be referred to also as "extraction-source sound waveform signal"). Then, the feature amount calculation section (feature amount generation section) 122 analyzes a waveform signal of each of the partial time periods, identified by the sound material identification section 121, to calculate (generate) a plurality of feature amounts quantitatively indicating a plurality of features of the waveform signal and outputs the calculated (generated) feature amounts to the sound material identification section 121.

As one specific example, the sound material identification section 121 detects, from the extraction-source sound waveform signal, an ON-set point (i.e. sound rising point) at which a sound volume changes by more than a predetermined amount, and then it designates, to the feature amount calculation section 122, various time widths starting at the ON-set point within a predetermined time range from the detected ON-set point, so that the feature amount calculation section 122 calculates a set of the plurality of feature amounts from a waveform signal included in each of the time widths. The feature amount set thus calculated for each of the time widths is output to the sound material identification section 121. Then, the sound material identification section 121 identifies, as a partial time period of the extraction-source sound waveform signal that corresponds to one sound material to be extracted from the waveform data set, a time period corresponding to the time width of one of the feature amount sets, calculated for the individual time widths, that satisfies a predetermined particular condition. a segment where the feature amounts satisfy predetermined conditions. In a similar manner to the aforementioned, the sound material identification section 121 sequentially extracts individual sound materials from the entire input waveform data set and identify partial time periods in the extraction-source sound waveform signal that correspond to the extracted sound materials. Such sound material extraction from the waveform data set may be performed using any desired one of the conventionally-known methods, such as the one disclosed in Japanese Patent Application Laid-open Publication No. 2010-191337.

As an alternative method for extracting a sound material, not only an ON-set point (sound rising point) but also an OFF-set (sound deadening point) may be detected. In such a case, it is only necessary to calculate a feature amount set in one partial time period between the detected ON-set and OFF-set points; namely, it is possible to eliminate the need for calculating, in a so-called "trial-and-error" fashion, a plurality of feature amount sets for various time widths starting at one ON-set point as set forth above.

Then, for each of the extracted sound materials, the sound material identification section 121 outputs information indicative of the identified partial time period (hereinafter referred to also as "identified segment") and feature amount data indicative of the feature amounts calculated for the identified segment, as well as information identifying the input waveform data set (e.g., waveform designation information).

The registration section 130 reads out, from the waveform DB, the tag data corresponding to the waveform data set indicated by the input waveform designation information. Then, the registration section 130 outputs, to the storage section 15, identification data indicative of the input waveform designation information and time designation information designating the identified segment as the data range, feature amount data and read-out tag data. In this manner, the identification data, feature amount data and tag data are registered into the sound material DB for each of the extracted sound materials.

Note that, in the above mentioned embodiment, the registration section 130 does not actually register (store), into the waveform DB, waveform data corresponding to the extracted sound materials, but only registers (stores) the identification data, feature amount data and tag data are registered into the sound material DB for each of the extracted sound materials.

On the other hand, sometimes, the registration section 130 may register, into the waveform DB, waveform data obtained by clipping out a sound waveform signal of the identified segment from the waveform data set input to the extraction section 120. In such a case, the identification data which the registration section 130 registers into the sound material DB does not include time designation information. The waveform designation information included in the identification data is not the waveform designation information input to the registration section 130, but registered as indicating the waveform data set registered in the waveform DB during the current processing. Namely, in this case, the identification data indicates the sound waveform signal of the sound material by identifying the entire waveform data set as the sound material. Further, in this alternative example, when registering a waveform data set into the waveform DB, the registration section 130 not only associates the tag data corresponding to the waveform data set indicated by the input waveform designation information with the newly-registered waveform data set as tag data corresponding to the newly-registered waveform data, but also sets that tag data as tag data corresponding to a sound material to be registered into the sound material DB.

Which one of the aforementioned two registration methods (i.e., the method where no actual waveform data corresponding to the extracted sound materials is registered into the waveform DB and the method where clipped-out data is registered into the waveform DB) may be set in advance by the user. In the illustrated example, the former registration method will be referred to as "mode 1 ", while the latter registration method will be referred to as "mode 2". Any desired one of the registration methods may be set in accordance with a predetermined algorithm. For example, if the number of sound materials extracted by the extraction section 120 is equal to or greater than a predetermined number, "mode 1" may be set, and if the number of sound materials extracted by the extraction section 120 is less than the predetermined number, "mode 2" may be set. Alternatively, only one of the two registration methods, i.e. "mode 1" or "mode 2", may be used. The following description will be given assuming that "mode 1" is set.

The correction section 200 has a function for correcting, in accordance with a user's instruction, the data range (time designation information) of a sound material before being registered into the waveform DB and sound material DB by the registration section 130. In this way, a sound material extracted by the extraction section 120 can be adjusted to become a sound material meeting a demand of the user. At that time, the content of the feature amount data need not be changed, or may be updated by being recalculated by the feature amount calculation section 122 on the basis of the data-range-corrected sound material.

Note that the correction section 200 may be constructed to correct the data range of an already-registered sound material. The foregoing has been a description about the sound material extraction function and the correction function.

### <Example Behavior of the Sound Material Extraction Function and Correction Function>

The following describe example behavior of the sound material extraction function and correction function when the extraction program and the correction function are executed, with reference to example displays on the display screen 131.

When the user wants to extract a sound material from a waveform data set on the DAW, for example, the user inputs an extraction program execution instruction to the data processing apparatus 10. Thus, a display for the user to select a waveform data set from the waveform DB is presented on the display screen 131. Then, once the user selects, on the display, a waveform data set from which to extract a sound material, an analysis period designation display of Fig. 7 is presented on the display screen 131.

Fig. 7 is a diagram showing an example of the analysis period designation display presented on the display screen 131, on which are displayed a sound waveform signal wd1 of the selected waveform data set and a sound waveform signal wd2 indicative of a part of the sound waveform signal wd1 in an enlarged scale, as well as a displayed range window ws for defining a displayed range of the sound waveform signal wd2 of the sound waveform signal wd1. Once the user inputs an instruction for changing a position and range of the displayed range window ws, the control section 11 changes the current position and range of the display range window ws in accordance with the user's instruction but also changes the display of the sound waveform signal wd2 in accordance with the changed position and range of the display range window ws.

On the analysis period designation display presented on the display screen 131 are also displayed range designating arrows (i.e., start and end designating arrows as and ae) for designating a time range of the sound waveform signal of the selected waveform data set which should be set as an extraction-source sound waveform signal (such a time range will hereinafter be referred to as "analysis period tw"). Once the user designates positions of the start and end designating arrows as and ae by use of a pointer pt or the like, a range between the designated positions of the start and end designating arrows as and ae is designated as the analysis period tw. Such range designation may be performed using any other suitable method than the aforementioned, e.g. by inputting numerical values indicative of the numbers of beats and time points by means of an input device.

Further, on the analysis period designation display presented on the display screen 131 are displayed a trial- or test-listening button b1 for receiving (i.e., operable by the user to input) an user's instruction for reproducing waveform data of the designated analysis period tw and audibly outputting the reproduced waveform data through the speaker 161, and a decision or enter button b2 for confirming or deciding on the designated analysis period tw. Once the user decides on a desired analysis period by means of the pointer pt or the like while test-listening to a sound by operation of the test-listening button b1, the user operates the enter button b2. Note that the entire period of the selected waveform data set may be designated by user's operation. In response to user's operation of the enter button b2, the display screen 131 shifts to an extraction completion display shown in Fig. 8.

Fig. 8 is a diagram showing an example of the extraction completion display presented on the display screen 131 in the embodiment of the invention, on which are displayed an extraction-source (or extracted-from) sound waveform signal wv that represents the waveform data of the analysis period, a display indicative of time periods (identified segments) of extracted sound materials (indicated by sna, snb, snc and snd in the figure) and indications of categories classified on the basis of feature amount data of the individual sound materials (indicated by category icons ica, icb, icc and icd in the figure), as well as a correction button b3 for correcting the identified segments and a registration button b4 for registering the extracted sound materials into the database. Note that the indications of the classified categories need not necessarily be made by icons and may be made in any other suitable form, such as one where respective waveform display areas of the sound materials are displayed in different colors according to their categories.

Once the user operates any one of the category indications (icons ica, icb, icc and icd) corresponding to the sound materials by means of the pointer pt, the sound waveform signal of the sound material corresponding to the operated indication is audibly output through the speaker 161 under the control of the control section 11.

Then, if the user operates the registration button b4, for example, after having test-listened to the sound output through the speaker 161 to find that the identified segment of the sound material need not be corrected, the registration section 130 registers various data (identification data, feature amount data and tag data) related to the sound material into the sound material DB.

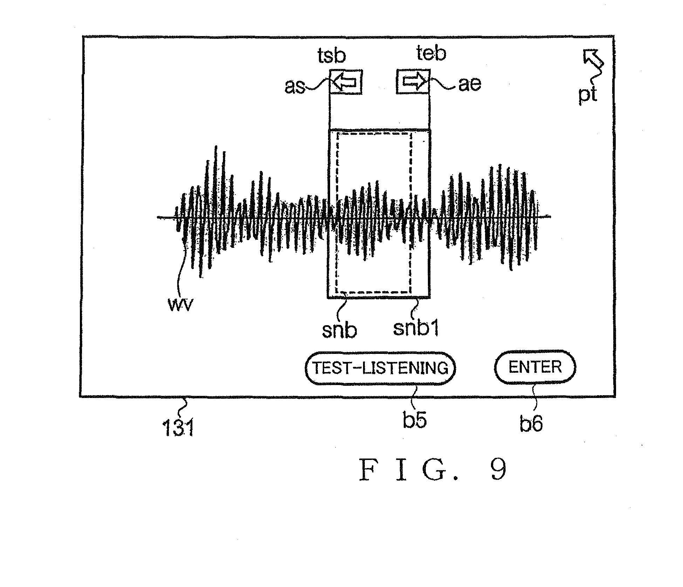

On the other hand, once the user operates the correction button b3 thinking that he or she wants to correct the identified segment of the sound material, the correction program is executed, so that the display screen 131 shifts to a period correction display shown in Fig. 9.

Fig. 9 is a diagram showing an example of the period correction display presented on the display screen 131 in the embodiment of the present invention. As shown in Fig. 9, a portion of a sound material test-listened to last is displayed in an enlarged scale on the period correction display. The illustrated example of Fig. 9 assumes that the sound material test-listened to last is a sound material snb. Also displayed on the period correction display are range designating arrows (start and end designating arrows as and ae) for adjusting a period (identified segment) of a sound waveform signal corresponding to the sound material.

Also displayed on the period correction display are a test-listening button b5 for test-listening to a sound indicated by a sound waveform signal of a period designated by the range designating arrows, and an enter button b6 for confirming, as a sound waveform signal corresponding to the sound material, the sound waveform signal of the period designated by the range designating arrows.

By repeating operating the range designating arrows to adjust the period of the sound waveform signal and operating the test-listening button b5 to test-listen to the sound represented by the sound waveform signal, the user designates a period of the sound waveform signal such that the sound material becomes a desirable sound material. The illustrated example of Fig. 9 assumes that a sound material snb1 corresponding to a sound waveform signal of a period defined by start and end times tsb and teb has been designated by the user. Then, once the user operates the enter button b6, the extracted sound material snb is corrected into the user-designated sound material snb1.

Then, once the user operates the registration button b4, the registration section 130 registers various data (identification data, feature amount data and tag data) related to the sound material into the sound material DB, as set forth above. At that time, the identification data corresponding to the corrected sound material is registered into the sound material DB. The feature amount data may be either one indicative of feature amounts calculated prior to the correction or one indicative of feature amounts re-calculated by the feature amount calculation section 122 for a sound waveform signal indicated by the corrected sound material. Which one of the aforementioned two the feature amount data should be employed may be determined in accordance with a user's instruction.

The embodiment of the invention can adjust a rise feeling of a sound by changing the start time of the sound waveform signal corresponding to the sound material as noted above, and can also adjust a reverberation feeling of a sound by changing the end time of the sound waveform signal.

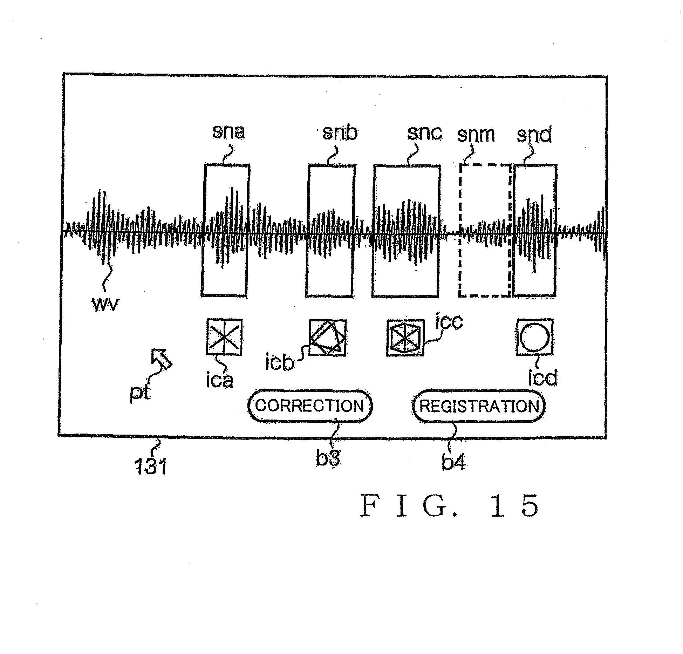

Whereas, in the above-described example, a period (identified segment) of a sound material is automatically extracted by the sound material identification section 121, the present invention is not so limited, and a period (identified segment) of a sound material may be manually extracted by the user designating a desired partial time period on the image of the extraction-source sound waveform signal wv displayed on the display screen 131. Fig. 15 shows an example of such user's manual sound-material-period extraction operation on the same display as shown in Fig. 8. In Fig. 15, reference character "snm" indicates a period of a sound material manually extracted by the user. The user listens to the sound of the extraction-source sound waveform signal wv displayed on the screen, and then, if there is any favorite portion among waveform data portions that have not yet been automatically extracted, the user can designate, as a sound material, that favorite portion snm on the screen by GUI operation via the operation section 12 and the like. In accordance with such user's designation, the waveform data of the portion snm are manually extracted as a sound material, so that feature amount data of the thus-manually-extracted sound material are automatically calculated by the feature amount extraction section 120. The foregoing has been a description about an example behavior responsive to execution of the extraction program and correction program.

### <Construction for the Data Search Function>

The following describe the data search function implemented by the control section 11 of the data processing apparatus 10 executing the search program. Note that a part or whole of a construction for implementing the following search function may be implemented by hardware.

Fig, 10 is a block diagram explanatory of the construction for implementing the data search function in the embodiment of the present invention. As the control section 11 executes the search program, a sound identification section 340, including a display control section 310, a condition determination section 320, a feature identification section 330 and a sound identification section 340, is constructed to implement the data search function.

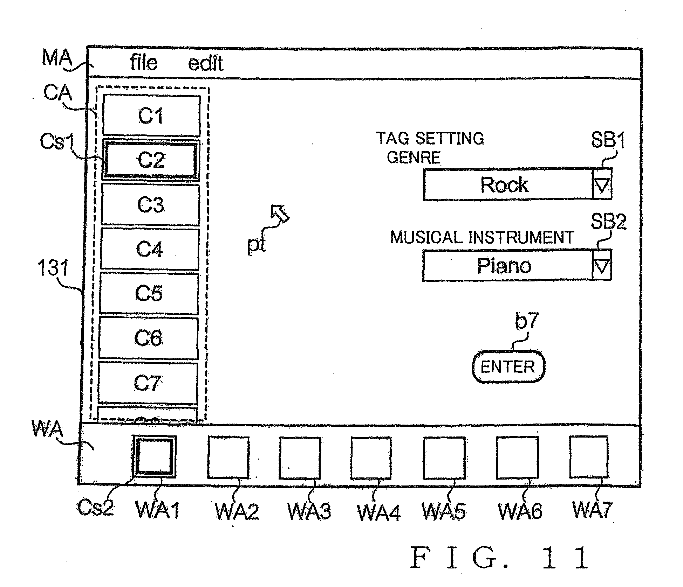

The display control section 310 displays, on the display screen 131, images indicative of a sound material data set indicated by the feature identification section 330 (i.e., information indicative of the sound material data set, such as a sound material data name and images corresponding to feature amount data of the sound material); displaying images indicative of a sound material data set as noted above will hereinafter be referred to simply as "displaying a sound material data set". Further, the display control section 310 changes displayed content on the display screen 131 in accordance with a user's instruction input via the operation section 12. Namely, various content related to the data search function (Figs. 11 to 14) is displayed on the display screen 131 as shown in Figs. 11 to 14, which include a display for designating search conditions. Specific examples of content to be displayed on the display screen 131 will be described later in relation to example behavior of the data search function.

Once the user designates a particular category from among a plurality of categories defined in the classification plate, the condition determination section 320 determines, as first search conditions, designated values of various types of feature amounts in the designated category, and outputs information indicative of the first search conditions to the feature identification section 330. Further, once the user designates one or more of a plurality of tag data, the condition determination section 320 determines, as second search conditions, the designated tag data and outputs, to the feature identification section 330, information indicative of the second search conditions. Further, in this example, upper and lower limit values (maximum and minimum values) max and min (classification standards) of the various types of feature amounts in the user-designated category are also included in the second search conditions.

The feature identification section 330 searches for and identifies feature amount data similar to the first search conditions, determined in the aforementioned manner, from the sound material DB with the second search conditions, determined as above, taken into account. Details of such a search by the feature identification section 330 will be discussed below.

First, the feature identification section 330 narrows feature amount data of individual sound materials, registered in the sound material DB, down to those which satisfy the classification standards included in the second search conditions and with which the tag data designated by the second search conditions are associated, as objects of calculation of distances from the first search conditions, i.e. as search-object feature amount data. Then, the feature identification section 330 calculates similarities, from the designated values of the individual feature amounts determined as the first search conditions, of each of the narrowed-down feature amount data in accordance with a predetermined similarity calculation method. The predetermined similarity calculation method is designed to calculate degrees of similarity and is, in the illustrated example, a Euclid distance calculation method. For example, the feature identification section 330 calculates a similarity or distance per feature amount, namely, between the designated value of each of the feature amounts determined as the first search conditions and the designated value of the corresponding feature amount of one sound material (i.e., one search-object sound material) and then sums up the thus-calculated values of all the feature amounts of the search-object sound material. In this way, the feature identification section 330 can obtain a single numerical value indicative of an overall similarity of the one search-object sound material to the search conditions. Note, however, that the predetermined similarity calculation method may be any other suitable calculation method, such as a Mahalanobis distance calculation method or cosine similarity calculation method, as long as it uses a scheme for calculating distances of n-dimensional vectors or similarities of n-dimensional vectors. Such n-dimensional vectors correspond to the number of types of feature amounts that become objects of comparison in the calculation of similarities. Further, any type of feature amount for which no designated value of a category is determined as the first search condition (e.g., feature amount p2 of category Cl) is not used in the similarity or distance calculation.

On the basis of results of such calculation, the feature identification section 330 identifies feature amount data having similarities greater than a predetermined value (i.e. having small distances from the designated values determined as the first search conditions). Then, the feature identification section 330 outputs, to the sound identification section 340, information indicative of sound material data sets corresponding to the thus-identified feature amount data (i.e., search-object sound material data sets). Also, the feature identification section 330 outputs, to the display control section 310, the above-mentioned information indicative of sound material data sets corresponding to the identified feature amount data, in association with the similarities of the sound material data. In this manner, the sound material data sets are displayed on the display screen 131 as searched-out results in order of their similarities to the search conditions. Note that a predetermined number of the sound material data sets may be displayed on the display screen 131 in descending order of the similarities of the feature amount data.

The sound identification section 340 identifies a particular sound material data set selected by the user as a desired sound material data set from among the sound material data sets displayed on the display screen 131 as searched-out results. In the illustrated example, the sound material data set identified in this manner is used to identify the identifier of a sound material that is to be used in creating a sound material track of sequence data. The foregoing has been a description about the data search function.

### <Example Behavior of the Data Search Function>

The following describe example behavior when the aforementioned search program is executed, with reference to example displays presented on the display screen 131.

First, when the user wants to select, from the sound material DB, a sound material for use in creation of sequence data on the DAW, for example, the user inputs a search program execution instruction to the data processing apparatus 10. Thus, a search condition setting display is presented on the display screen 131, as shown in Fig. 11.

Fig. 11 is a diagram explanatory of an example of the search condition setting display presented on the display screen 131 in the embodiment of the present invention. A menu area MA is provided on an upper end portion of the search condition setting display, and a registration area WA is provided on a lower end portion of the search condition setting display. The menu area MA is an area provided for the user to perform operation for inputting various instructions, such as execution start of the search program, storage of data and execution stop of the search program. The registration area WA is an area provided for registering a sound material data set selected as a searched-out result. The registration area WA includes sound registration areas WA1, Wa2, ..., WA7 for registering sound material data sets. A cursor Cs2 is provided for the user to select into which of the sound registration areas WA1, Wa2, ..., WA7 the selected sound material data set should be registered.

A category area CA is an area provided for displaying categories registered in the classification plate. In the illustrated example of Fig. 11, categories C1, C2, ..., C7 and a part of category C8 are displayed. The category area CA is scrollable vertically (in an up-down direction), so that categories following category C8 can be displayed by upward scrolling of the category area CA. Fig. 11 shows a state where a cursor Cs1 has selected category C2.

Also displayed on the search condition setting display presented on the display screen 131 are selection boxes SB1 and SB2 for selecting tag data per classification group. In the illustrated example of Fig. 11, the selection box SB1 is provided for selecting and designating tag data of the classification group "musical genre", while the selection box SB2 is provided for selecting and designating tag data of the classification group "musical instrument". In the illustrated example of Fig. 11, tag data of "Rock" is currently selected as the musical genre, and "Piano" is currently selected as the musical instrument. For example, the user changes positions of the cursors Cs1 and Cs2 and selects content of the selection boxes SB1 and SB2 by use of a pointer pt, and designates first and second search conditions corresponding to the selected content of the selection boxes SB1 and SB2. Not only just one musical genre but also a plurality of musical genres may be selected via the selection box SB1. Similarly, not only just one musical instrument but also a plurality of musical instruments may be selected via the selection box SB2.

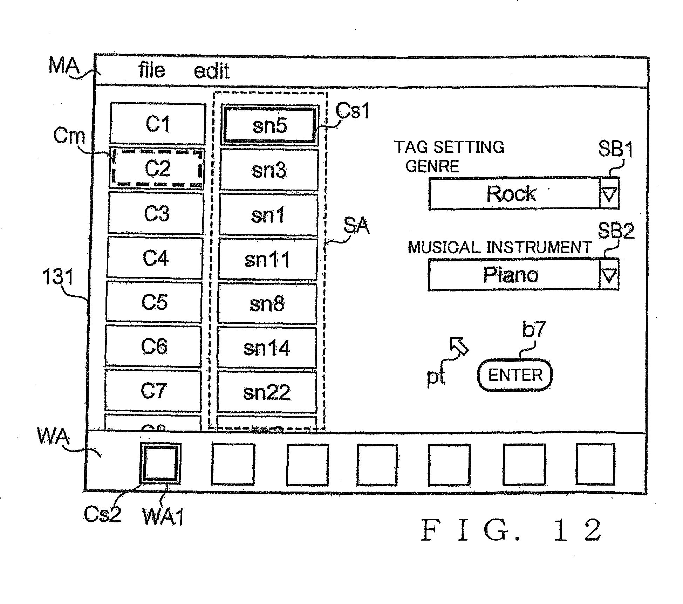

Once first and second search conditions are designated by the user, the first and second search conditions are determined by the condition determination section 320, so that processing by the feature identification section 330 is started. Then, the display screen 131 shifts to a searched-out result display shown in Fig. 12.

Fig. 12 is a diagram explanatory of an example of the searched-out result display presented on the display screen 131 in the embodiment of the present invention. A searched-out result area SA is where sound material data sets (sn5, sn3, sn1, .. etc.) corresponding to feature amount data identified by the condition determination section 320 are displayed as searched-out results, and this searched-out result area SA is scrollable vertically in a similar manner to the category area. The sound material data sets correspond to feature amount data identified from the sound material DB by the feature identification section 330 in accordance with the first and second search conditions, as noted above. In the illustrated example, the higher the similarities to the search conditions (i.e., the smaller the distances from the search conditions), the higher positions in the searched-out result area SA are displayed the sound material data sets; that is, the sound material data sets having higher similarities to the search conditions are displayed at higher positions in the searched-out result area SA. A cursor Cm indicated by broken line indicates a category designated by the user on the search condition setting display (see Fig. 11).

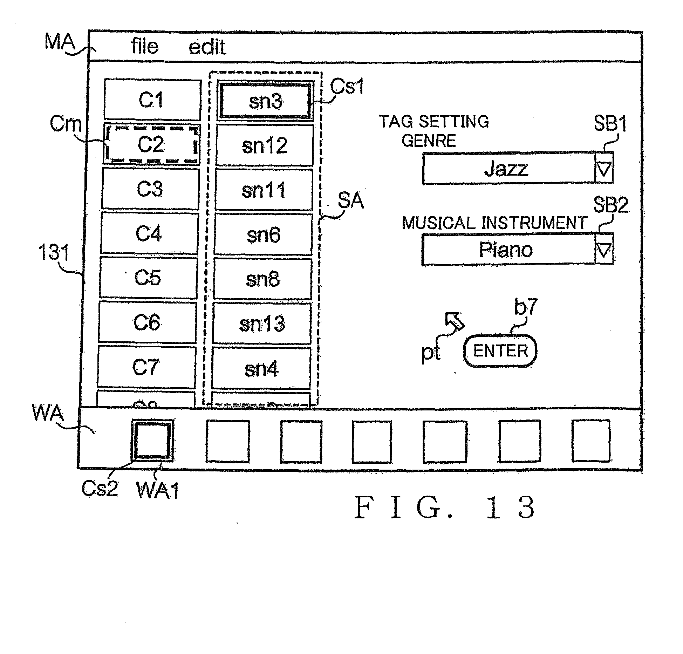

Fig. 13 is a diagram explanatory of an example of the searched-out result display presented when the selected tag data has been switched to another in the display of Fig. 12. Namely, as the user operates the selection box SB1 to switch the tag data of musical genre "Rock" to the tag data of musical genre "Jazz" in the display shown in Fig. 12, the searched-out result display is switched to the content shown in Fig. 13 with the displayed sound material data sets changed accordingly in the search result area SA. This is because, as the user-selected tag data switches, the second search conditions designated by the user are changed, and thus, the search-object feature amount data too are changed.

Some of the sound material data sets displayed in the searched-out result area SA of Fig. 13 are the same as some of the sound material data sets displayed in the searched-out result area SA of Fig. 12, and the others of the sound material data sets displayed in the searched-out result area SA of Fig. 13 are different from the others of the sound material data sets displayed in the searched-out result area SA of Fig. 12. In the case of those sound material data sets displayed in both of the searched-out result areas SA of Figs. 12 and 13, the corresponding tag data include both "Rock" and "Jazz". In the case of those sound material data sets displayed only in the searched-out result area SA of Fig. 13 (not in the searched-out result area SA of Fig. 12), the corresponding tag data include only "Jazz" and does not include "Rock". On the other hand, in the case of the sound material data sets displayed only in the searched-out result area SA of Fig. 12 (not displayed in the searched-out result area SA of Fig. 13), the corresponding tag data include only "Rock" and does not include "Jazz".

Once the sound material data set selected via the cursor Cs1 changes to another sound material data set by the user vertically moving the cursor Cs1 in the searched-out result display shown in Fig. 12 or 13, the control section 11 supplies a sound waveform signal of the sound material indicated by the changed (i.e., newly selected) sound material data set to the speaker 161 via the sound processing section 16. For example, once the sound material data set selected via the cursor Cs1 changes from the sound material data set sn3 to the sound material data set sn5 in the searched-out result display shown in Fig. 12, a sound corresponding to the changed (i.e., newly selected) sound material data set sn5 is audibly generated through the speaker 161, so that the user can listen to the content of the sound material corresponding to the sound material data set newly selected via the cursor Cs1.

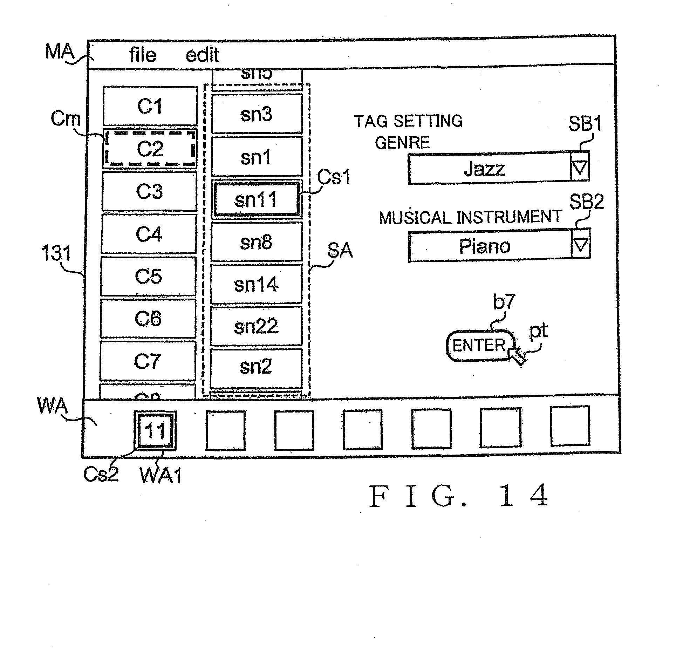

When the user has decided on a desired sound material while checking sounds audibly generated in response to the vertical movement of the cursor Cs1, the user moves the cursor Cs1 to the sound material data set corresponding to the desired sound material and then operates an enter button b7, so that the sound material data set now selected by the user is identified by the sound identification section 340. Thus, the display screen 131 shifts to a sound material determination display shown in Fig. 14.

Fig. 14 is a diagram explanatory of an example of the sound material determination display presented on the display screen 131 in the embodiment of the present invention. Once the sound identification section 340 identifies the sound material data set (sound material data set sn11 in the illustrated example of Fig. 14), information indicative of the identified sound material data set ("11" indicative of the sound material data set sn11 in the illustrated example of Fig. 14) is displayed in the sound registration area WA1 selected by the cursor Cs2. The sound material data sets registered in the sound registration areas WA1, WA2, ... are used for identifying the identifiers of sound materials at the time of creation of a sound material track, as noted above.

Because the user can narrow down the search-object sound material data sets by changing tag data to be designated as the second search condition, the user can readily select a desired sound material. Because the tag data are associated with sound materials by use of information originally associated with the extraction-source sound waveform signal, the user is allowed to efficiently select any desired sound material without separately inputting tag data corresponding to the individual sound materials.

### <Modifications>

The above-described preferred embodiment of the present invention may be modified variously as follows.

### <Modification 1>

Whereas the preferred embodiment has been described above in relation to the case where the user selects, from the waveform DB, a waveform data set from which a sound material is to be extracted, the user may perform operation such that all waveform data sets from which no sound material has been extracted yet are selected. Such a modified arrangement may be used, for example, when new waveform data sets have been added to the waveform DB, for example, from an external storage medium or the like and when sound materials are to be extracted collectively from the added waveform data sets. In such a case, the acquisition section 110 of the sound material extraction function section 100 may sequentially acquire the added waveform data sets to allow sound materials, extracted from the thus-acquired waveform data sets, to be registered into the sound material DB. Further, when new waveform data sets have been added to the waveform DB as above, sound materials may be automatically extracted from the added waveform data sets so that the extracted sound materials are registered into the sound material DB, regardless of user's operation.

### <Modification 2>

Whereas the preferred embodiment has been described above in relation to the case where a waveform data set from which a sound material is to be extracted is registered in advance in the waveform DB in advance, sound materials may be extracted from unregistered data. For example, the unregistered data may be a sound waveform signal input from outside the data processing apparatus 10, or a sound waveform signal obtained by sequence data being reproduced by the reproduction function. Namely, an object from which a sound material is to be extracted need not necessarily be a waveform data set and may be a sound data set indicative of a sound waveform signal. In such a case, a sound data set or a sound material data set extracted from a sound data set (i.e., a waveform data set indicated by a sound waveform signal extracted from the sound data set) may be registered in the waveform DB.

Further, if the sound data set has some meta data added thereto, the meta data may be used directly as the "tag data" in the present invention, or if the meta data is not identical to any of tag data already existing in the waveform DB, the meta data may be used, for example, after being converted into one of the already-existing tag data which is similar to the meta data. If, on the other hand, the sound data set has no metal data added thereto, the user may input new tag data (indicative of a new classification attribute) to be associated with the sound material. Alternatively, the control section 11 may analyze a feature of the sound waveform signal indicated by the sound data set and determine, in accordance with a result of the sound waveform signal analysis, tag data indicative of a classification attribute conceptually representing the analyzed feature and associate the thus-determined tag data with the sound material. Alternatively, the sound material may be registered into the sound material DB without tag data being associated therewith.

### <Modification 3>

The above-described preferred embodiment may be modified such that, if a waveform data set selected by the user as a waveform data set from which a sound material is to be extracted indicates a sound waveform signal shorter than a predetermined time length, the extraction section 120 may handle the entire sound waveform signal as a sound material instead of extracting a segment of the sound waveform signal as a sound material. In such a case, feature amounts calculated by the feature amount calculation section 122 indicate features of the entire sound waveform signal indicated by the selected waveform data set.

### <Modification 4>

Whereas the preferred embodiment has been described above in relation to the case where the first search conditions are determined by the user designating any one of the categories already defined by the classification template, the first search conditions may be determined by the user individually designating various feature amounts. Further, content designated by the user may be registered into the classification template as a new category.

### <Modification 5>

The above-described preferred embodiment may be modified such that, as a sound material is registered into the sound material DB, the registration section 130 may store sequence data, corresponding to a sound material track defining the registered sound material and sound generation timing of the registered sound material, into the storage section 15. Namely, the registration section 130 may store, into the storage section 15, data by which the identifier of the sound material extracted from an extraction-source sound waveform signal of one waveform data set and information indicative of a start time of an identified segment of the extraction-source sound waveform signal corresponding to the sound material are associated with each other.

While the start time of the identified segment is an absolute time corresponding to an elapsed time from the start of the sound waveform signal, sound generation timing in the sound material track is represented as a relative time, such as the numbers of measures, beats and ticks. Thus, the registration section 130 stores the sound material data set as the sound material track by converting the absolute time into a relative time using a predetermined tempo (e.g., tempo "120" beats (one beat = 0.5 sec)) as a conversion basis. As the thus-stored sound material track is reproduced by the reproduction function at the above-mentioned tempo in such a manner that the sound material portion extracted from the extraction-source sound waveform signal is audibly generated through the speaker 161 while the remaining portion is muted.

### <Modification 6>

Whereas the preferred embodiment has been described above in relation to the case where the displayed order of sound material data sets in the searched-out result area SA represents the order of similarities to the search conditions, the order of similarities may be displayed in another display style than the displayed order, such as displayed sizes or displayed thicknesses preferably together with degrees of similarity to the search conditions; namely, it is only necessary that the display style change in accordance with the degrees of similarity

### <Modification 7>

Whereas the preferred embodiment has been described above in relation to the case where sound material data sets registered in the sound registration areas WA1, Wa2, ... are used for creation of a sound material track etc., such registered sound material data sets may be used for other purposes. For example, the registered sound material data sets may be used in a musical instrument, sound generator, etc. that audibly generate sounds using the sound material data sets. In the case where such sound material data sets are used in a musical instrument, they may be used with sound pitches changed as desired, or sound material data sets with different sound pitches may be prestored in the storage section 15. Further, an arrangement may be made such that sound material data sets different from each other only in sound pitch are not made objects of search by the feature identification section 330. As seen from the foregoing, the data processing apparatus 10 of the present invention is applicable not only to information processing apparatus but also to musical instruments, sound generators, etc.

### <Modification 8>

Whereas the preferred embodiment has been described above in relation to the case where tag data is associated with each individual waveform data set in the waveform DB, there may be one or some waveform data sets having no tag data associated therewith. If a waveform data set having no tag data associated therewith has been selected by the user, a sound material extracted from the selected waveform data set may be registered into the sound material DB with no tag data associated with the extracted sound material, or tag data input by the user may be associated with the extracted sound material. Further, the control section 11 may analyze a sound waveform signal indicated by the selected waveform data set and determine, in accordance with a result of the sound waveform signal analysis, tag data to be associated with a sound material extracted from the waveform data set.

Further, even in the case of a waveform data set having tag data associated therewith, other tag data input by the user may be associated with a sound material extracted from the waveform data set when the extracted sound material is registered into the sound material DB, instead of the tag data of the waveform data set being associated with the extracted sound material. As an alternative, the extracted sound material may be registered into the sound material DB with no tag data associated with the extracted sound material.

### <Modification 9>

Whereas the preferred embodiment has been described above in relation to the case where the data processing apparatus of the present invention is implemented by the constructions of the reproduction function, sound material extraction function, correction function and data search function, the constructions of the other functions than the sound material extraction function may be dispensed with.

### <Modification 10>

The various programs employed in the above-described preferred embodiment may be supplied stored in a computer-readable recording medium, such as a magnetic recording medium (like a magnetic tape, magnetic disk or the like), optical recording medium (like an optical disk), magneto-optical recording medium or semiconductor memory. Further, the data processing apparatus 10 may download the various programs via a communication network.

This application is based on, and claims priority to, JP PA 2011-118517 filed on 26 May 2011. The disclosure of the priority application, in its entirety, including the drawings, claims, and the specification thereof, are incorporated herein by reference.

## Claims

1. A data processing apparatus comprising:
an acquisition section (110) which acquires a sound data set from a waveform database where the sound data set and meta data for classifying the sound data set are stored in association with each other;
a sound material identification section (121) which analyzes a sound waveform signal indicated by the sound data set acquired by said acquisition section and thereby identifies a partial time period of the sound waveform signal as a sound waveform signal of a sound material;
a feature amount generation section (122) which analyzes the sound waveform signal of the sound material identified by said sound material identification section and thereby generates feature amounts quantitatively indicating features of the sound waveform signal of the sound material; and
a registration section (130) which registers identification data indicative of the sound waveform signal of the sound material, feature amount data indicative of the feature amounts generated by said feature amount generation section and the meta data corresponding to the acquired sound data set into a sound material database in association with one another.

2. The data processing apparatus as claimed in claim 1, which further comprises:
a condition determination section (320) which determines, as search conditions, the meta data designated by a user and the feature amounts;
a feature identification section (330) which searches for and identifies, from the sound material database, feature amount data with which is associated the meta data indicated by the search conditions and which is similar to the feature amounts indicated by the search conditions; and
a display control section (310) which causes a display section to display, as a search result, information indicative of identification data corresponding to the feature amount data identified by said feature identification section.

3. The data processing apparatus as claimed in claim 1 or 2, wherein said sound material identification section (121) analyzes a sound waveform signal in a user-designated partial range of the sound waveform signal indicated by the acquired sound data set and thereby identifies, as a sound waveform signal of a sound material, a partial time period of the analyzed sound waveform signal.

4. The data processing apparatus as claimed in any one of claims 1 - 3, wherein the identification data indicates a sound waveform signal of the period, identified by said sound material identification section, by a combination of the sound waveform signal indicated by the acquired sound data set and time information indicative of the identified partial time period of the sound waveform signal indicated by the acquired sound data set.

5. The data processing apparatus as claimed in any one of claims 1 - 3, wherein the identification data indicates a sound waveform signal of the partial time period, identified by said sound material identification section, extracted from the sound waveform signal indicated by the sound data set.

6. The data processing apparatus as claimed in any one of claims 1 - 5, which further comprises a correction section (200) that adjusts the partial time period identified by said sound material identification section as the sound waveform signal of the sound material.

7. The data processing apparatus as claimed in any one of claims 1 - 6, which further comprises an identification section (12, 13) that, in response to user's operation, identifies, as a sound waveform signal of a sound material, a partial time period of the sound waveform signal indicated by the acquired sound data set.

8. A computer-implemented method comprising:
an acquisition step of acquiring a sound data set from a waveform database where the sound data set and meta data for classifying the sound data set are stored in association with each other;
a sound material identification step of analyzing a sound waveform signal indicated by the sound data set acquired by said acquisition step and thereby identifying a partial time period of the sound waveform signal as a sound waveform signal of a sound material;
a feature amount generation step of analyzing the sound waveform signal of the sound material identified by said sound material identification step and thereby generating feature amounts quantitatively indicating features of the sound waveform signal of the sound material; and
a registration step of registering identification data indicative of the sound waveform signal of the sound material, feature amount data indicative of the feature amounts generated by said feature amount generation step and the meta data corresponding to the acquired sound data set into a sound material database in association with one another.

9. A non-transitory computer-readable storage medium containing instructions for causing a processor to perform a method comprising:
an acquisition step of acquiring a sound data set from a waveform database where the sound data set and meta data for classifying the sound data set are stored in association with each other;
a sound material identification step of analyzing a sound waveform signal indicated by the sound data set acquired by said acquisition step and thereby identifying a partial time period of the sound waveform signal as a sound waveform signal of a sound material;
a feature amount generation step of analyzing the sound waveform signal of the sound material identified by said sound material identification step and thereby generating feature amounts quantitatively indicating features of the sound waveform signal of the sound material; and
a registration step of registering identification data indicative of the sound waveform signal of the sound material, feature amount data indicative of the feature amounts generated by said feature amount generation step and the meta data corresponding to the acquired sound data set into a sound material database in association with one another.
